# NOUVEAU FASCICULE DE BREVET EUROPEEN

(11) **EP 2 879 875 B2**
(45) Date de publication et mention de la décision concernant l'opposition: **17.07.2024**
(45) Mention de la délivrance du brevet: 16.08.2017
(21) Numéro de dépôt: 13744525.0
(22) Date de dépôt: 31.07.2013
(51) Int. Cl.: B32B 27/32, B32B 1/08, F16L 11/08

(54) **CONDUITE FLEXIBLE SOUS MARINE COMPRENANT UNE GAINE POLYMÉRIQUE INTERNE ET/OU EXTERNE D'ÉTANCHÉITÉ COMPRENANT UN POLYÉTHYLÈNE À HAUT POIDS MOLÉCULAIRE**
FLEXIBLE UNTERWASSERRÖHRE MIT EINER INNEREN UND/ODER ÄUSSEREN POLYMERVERSCHLUSSHÜLLE MIT POLYETHYLEN VON HOHEM MOLEKULARGEWICHT
FLEXIBLE UNDERWATER PIPE INCLUDING AN INNER AND/OR OUTER POLYMERIC SEALING SHEATH INCLUDING POLYETHYLENE HAVING A HIGH MOLECULAR WEIGHT

(30) Priorité: 03.08.2012 FR 1257601
(43) Date de publication de la demande: 10.06.2015
(73) Titulaire: TechnipFMC Subsea France, 92400 Courbevoie (FR)
(72) Inventeur: TRONC, Frédéric, F-76480 Saint Pierre de Varengeville (FR)
(74) Mandataire: Lavoix
(86) Numéro de dépôt international: PCT/EP2013/066059
(87) Numéro de publication internationale: WO 2014/020052

(56) Documents cités:
- EP-A1- 0 803 347
- WO-A1-03/044414
- WO-A1-2006/120320
- WO-A1-2007/026168
- WO-A1-2007/026168
- WO-A1-2008/001114
- WO-A1-2010/008964
- WO-A1-2014/020053
- WO-A1-91/19924
- WO-A1-96/30687
- US-A- 4 518 552
- US-A1- 2008 006 338
- US-A1- 2010 021 665
- US-A1- 2010 116 373
- US-B2- 7 243 686

## Description

La présente invention concerne une conduite flexible sous-marine destinée au transport des hydrocarbures en eau profonde.

Les conduites flexibles de transport des hydrocarbures comportent généralement, de l'extérieur vers l'intérieur de la conduite :
- une gaine polymérique externe d'étanchéité pour protéger l'ensemble de la conduite et notamment pour empêcher l'eau de mer de pénétrer dans son épaisseur,
- des nappes d'armures de traction,
- une voûte de pression,
- une gaine polymérique interne d'étanchéité, et
- éventuellement une carcasse métallique (figure).

Si la conduite comprend une carcasse métallique, elle est dite à passage non lisse ("rough-bore" en langue anglaise). Si la conduite est exempte de carcasse métallique, elle est dite à passage lisse ("smooth-bore" en langue anglaise). Généralement, pour le transport d'hydrocarbures, une conduite comportant une carcasse est préférée, alors qu'une conduite exempte de carcasse sera adaptée pour le transport d'eau et/ou de vapeur d'eau sous pression.

La carcasse métallique et la voûte de pression sont constituées d'éléments longitudinaux enroulés à pas court, et elles confèrent à la conduite sa résistance aux efforts radiaux tandis que les nappes d'armures de traction sont constituées de fils métalliques enroulés selon des pas longs pour reprendre les efforts axiaux.

La nature, le nombre, le dimensionnement et l'organisation des couches constituant les conduites flexibles sont essentiellement liés à leurs conditions d'utilisation et d'installation. Les conduites peuvent comprendre des couches supplémentaires à celles susmentionnées.

Dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 55°, typiquement compris entre 25° et 55° pour les nappes d'armures.

Ces conduites flexibles conviennent notamment au transport de fluides, notamment d'hydrocarbures dans les fonds marins et ce, à de grandes profondeurs. Plus précisément elles sont dites de type non lié ("unbonded" en anglais) et elles sont ainsi décrites dans les documents normatifs publiés par l'American Petroleum Institute (API), API 17J (3^{ème} édition - 1^{er} janvier 2009) et API RP 17B (3^{ème} édition - mars 2002).

Les conduites flexibles peuvent être utilisées à grande profondeur, typiquement jusqu'à 3000 mètres de profondeur. Elles permettent le transport de fluides, notamment d'hydrocarbures, ayant une température atteignant typiquement 130°C et pouvant même dépasser les 150°C et une pression interne pouvant atteindre 1000 bars, voire 1500 bars.

Le matériau constitutif de la gaine polymérique d'étanchéité interne ou externe doit être stable chimiquement et capable de résister mécaniquement au fluide transporté et à ses caractéristiques (composition, température et pression). Le matériau doit combiner des caractéristiques de ductilité, de résistance au temps (généralement, la conduite doit avoir une durée de vie d'au moins 20 ans), de résistance mécanique, à la chaleur et à la pression. Le matériau doit notamment être inerte chimiquement vis-à-vis des composés chimiques constituant le fluide transporté. Typiquement, les hydrocarbures transportés comprennent du pétrole brut, de l'eau et des gaz sous pression.

Divers matériaux polymères sont utilisés dans la gaine polymérique interne ou externe d'étanchéité, en particulier le polyéthylène (PE), réticulé ou non. Le polyéthylène peut notamment être du polyéthylène haute densité (PEHD).

Néanmoins, une gaine à base de polyéthylène peut être sujette au phénomène de cloquage (« blistering » en anglais). Dans une conduite flexible, la gaine d'étanchéité en matériau polymère est utilisée pour transporter des fluides composés de pétrole brut, d'eau et de gaz sous pression et en température. Dans ces conditions d'utilisation, le matériau polymère de la gaine d'étanchéité absorbe les gaz contenus dans le fluide pétrolier en fonction de leur nature chimique (via leur coefficient de solubilité) et de la pression partielle de chacun d'eux. Le temps de saturation du polymère, la mise en équilibre du système, dépend quant à lui des coefficients de diffusion et donc essentiellement de la température. Si la pression dans la conduite flexible vient à diminuer, les gaz absorbés tendent à s'extraire du polymère afin de maintenir l'équilibre entre les concentrations interne et externe. Si la rupture de l'équilibre est très rapide, plus rapide que la vitesse de diffusion des gaz hors du polymère (comme dans le cas d'arrêt de production ou shut-down), le système n'est plus à l'équilibre. La sursaturation de gaz dans la gaine de polymère conduit à des gradients de concentration en gaz et de température qui peut engendrer l'expansion plus ou moins importante et brutale des gaz (« rapid gas décompression » en anglais) pouvant générer des endommagements irréversibles tels que l'apparition de cloques ou de fissures ou encore la formation d'une microporosité uniformément répartie dans l'épaisseur du matériau. Ainsi, l'apparition de cloques est due au piégeage de gaz solubles au sein de la gaine ou à la décompression trop rapide de la conduite ne permettant pas au gaz de diffuser hors de la gaine. Ce phénomène de cloquage peut être catastrophique pour la gaine d'étanchéité, et donc pour la conduite flexible qui la contient, puisqu'il peut conduire à la perte de sa fonction d'étanchéité.

Typiquement, le phénomène de cloquage est observé pour une gaine d'étanchéité à base de polyéthylène, réticulé ou non, au contact d'un fluide pétrolier comportant des gaz corrosifs pouvant diffuser au sein de la gaine, sous pression élevée (supérieur à 200 bars) à une température de l'ordre de 60°C pour les polyéthylènes non réticulés, et 90°C pour les polyéthylènes réticulés. Ainsi, pour garantir une durée de vie d'au moins 20 ans de la conduite flexible, pour une pression de 200 bars, une conduite flexible dont une gaine d'étanchéité est en polyéthylène non réticulé ou réticulé ne peut être utilisée à des températures respectivement supérieures à 60°C et 90°C.

Par conséquent, des matériaux polymériques alternatifs au polyéthylène ont été développés pour la gaine polymérique interne ou externe d'étanchéité, notamment :
- le polyamide (PA), notamment le polyamide 11. Contrairement au polyéthylène, le polyamide possède une bonne résistance au cloquage, ainsi qu'une faible tendance au gonflement lorsqu'il est au contact du fluide pétrolier. Le polyamide est généralement utilisé pour des conditions de transport d'hydrocarbures pour lesquelles la pression est élevée et où la température peut s'élever jusqu'à 110°C.
   En revanche, un des inconvénients du polyamide est qu'il a tendance à s'hydrolyser en présence d'eau (souvent contenu dans les bruts de production). L'hydrolyse est rapide lorsqu'il est soumis à des températures (de l'ordre de 110°C et plus) et à des valeurs de pH élevées (pH supérieur à 7). Un autre inconvénient est son coût d'achat qui est sensiblement plus important que celui du polyéthylène.
- le polyfluorure de vinylidène (PVDF) (qui contient plus ou moins de plastifiant suivant le grade utilisé) possède une très bonne inertie chimique. Les gaines à base de PVDF peuvent supporter des pressions en service élevées ainsi que des températures pouvant atteindre 130°C-150°C.
   Son inconvénient majeur reste son prix, bien plus élevé que celui du polyéthylène ou du polyamide.

Ainsi, les gaines polymériques d'étanchéité interne ou externe à base de polyamide ou de polyfluorure de vinylidène subissent moins de phénomène de cloquage que des gaines à base de polyéthylène, réticulé ou non, mais elles sont plus coûteuses, et plus sujettes à une dégradation par hydrolyse dans le cas d'une gaine à base de polyamide.

Pour minimiser les coûts, on cherche à développer des gaines polymériques d'étanchéité interne ou externe à base de polyéthylène, mais présentant une bonne résistance au cloquage. Une des solutions proposées dans la demande de brevet CA 2 064 226 (COFLEXIP) est d'utiliser du polyéthylène de densité supérieure à 0,931 greffé silane et réticulé par hydrolyse et couplage des silanes, avec un taux de réticulation supérieur à 70%.

Cela étant, la préparation d'une gaine polymérique interne ou externe d'étanchéité à base de polyéthylène réticulé nécessite généralement d'extruder un polyéthylène réticulable et de le réticuler. D'une part, la réticulation est coûteuse en ce qu'elle nécessite généralement une étape supplémentaire de réticulation et un dispositif de réticulation, d'autre part des difficultés sont souvent rencontrées lorsqu'un polyéthylène réticulable est extrudé. Par exemple, il est souvent nécessaire d'utiliser un appareillage non conventionnel pour l'extrusion et d'effectuer l'extrusion à des températures peu élevées pour éviter la décomposition du catalyseur de réticulation (par exemple un composé générateur de radicaux libres) lors de l'extrusion, comme illustré dans la demande FR 2 521 573.

Par ailleurs, la demande WO 2007/026168 décrit une conduite flexible destinée au transport de fluide cryogénique comprenant de l'extérieur vers l'intérieur :
- une couche externe de polyéthylène 46, de préférence de polyéthylène à ultra-haut poids moléculaire,
- une couche de résistance aux impacts 42,
- une couche de renfort 38 permettant d'induire une résistance aux tensions axiales qui est incrustée et complètement liée à une couche élastomérique 36,
- une couche flexible de matériau d'isolation 34, et
- une conduite interne composée d'une carcasse métallique 10 recouverte d'une gaine polymère 32.

La demande US 2008/0006338 concerne des conduites enroulables comprenant de l'extérieur vers l'intérieur :
- une couche externe 56,
- une(des) couche(s) de renfort 14, qui comprend(nent) un polyéthylène à haut poids moléculaire, et
- une couche interne 12.

Le développement de gaines polymériques interne et/ou externe d'étanchéité à base de polyéthylène alternatives présentant une bonne résistance au cloquage et dont la préparation ne nécessite pas obligatoirement d'étape de réticulation est donc recherché.

Un des objectifs de la présente invention est de fournir une conduite flexible sous marine pour le transport d'hydrocarbures dont la gaine polymérique interne et/ou externe d'étanchéité subit moins, voire pas du tout, de phénomène de cloquage, et pour des températures et/ou pressions plus élevées, que des conduites comprenant une gaine polymérique interne et/ou externe d'étanchéité à base de polyéthylène réticulé ou non, tout en conservant les propriétés mécaniques de la gaine.

A cet effet, selon un premier objet, l'invention a pour objet une conduite flexible sous marine destinée au transport d'hydrocarbures, comprenant, de l'extérieur vers l'intérieur :
- une gaine polymérique externe d'étanchéité,
- au moins une nappe d'armures de traction,
- une voûte de pression,
- une gaine polymérique interne d'étanchéité,
- éventuellement une carcasse métallique,
dans laquelle la gaine polymérique externe d'étanchéité et/ou la gaine polymérique interne d'étanchéité comprend(nent) un polyéthylène à très haut poids moléculaire.

L'inventeur a en effet découvert qu'une couche comprenant un polyéthylène à très haut poids moléculaire subit moins, voire pas du tout, de phénomène de cloquage qu'une couche à base de polyéthylène, réticulée ou non, utilisée actuellement comme gaine d'étanchéité d'une conduite flexible, et ce même à des températures et/ou pressions plus élevées. Une telle couche est donc particulièrement adaptée pour être utilisée comme gaine polymérique interne et/ou externe d'étanchéité dans une conduite flexible.

De préférence, la gaine polymérique interne et/ou externe d'étanchéité de la conduite flexible selon l'invention comprend un polyéthylène à ultra haut poids moléculaire.

Au sens de la présente demande, un polyéthylène :
- à haut poids moléculaire (« high molecular weight polyethylene » (HMWPE ou HMwPE) en anglais) a une masse moléculaire moyenne en masse (Mw) supérieure à 400 000 g/mol,
- à très haut poids moléculaire (« very high molecular weight polyethylene » (VHMWPE ou VHMwPE) en anglais) a une masse moléculaire moyenne en masse (Mw) supérieure à 500 000 g/mol (par exemple le polyéthylène haute densité GHR8110 de Ticona dont la masse moléculaire moyenne est de l'ordre de 600 000 g/mol), de préférence supérieure à 1 000 000 g/mol,
- à ultra haut poids moléculaire (« ultra high molecular weight polyethylene » (UHMWPE ou UHMwPE) en anglais) a une masse moléculaire moyenne en masse (Mw) supérieure à 3 000 000 g/mol.

Au sens de la demande, un polyéthylène à haut poids moléculaire / très haut poids moléculaire / ultra haut poids moléculaire est un homopolymère d'éthylène, ou un copolymère d'éthylène contenant moins de 40% en poids, de préférence moins de 20% en poids d'unités issues de monomères α-oléfines comprenant de 3 à 10 atomes de carbone, telles que le propylène, le 1-butène, le 4-méthyl-2-pentène, le 1-hexène, le 1-octène ou le 1-décène.

Ces polyéthylènes à haut poids moléculaire / très haut poids moléculaire / ultra haut poids moléculaire sont disponibles commercialement. On peut par exemple citer les grades GUR^{®} de Ticona, Montell 1900, 1900H de Lyondell, les grades 3040, 4040, 5040 et 6540 de Braskern et le grade Stamylan^{®} UH034 de DSM.

Les polyéthylènes à très haut poids moléculaire sont non réticulés.

La gaine polymérique interne et/ou externe d'étanchéité comprenant un polyéthylène à très haut poids moléculaire de la conduite selon l'invention comprend typiquement :
- une matrice polymérique, et
- éventuellement des composants dispersés de façon discontinue dans la matrice polymérique.

Par « matrice polymérique », on entend la phase continue polymérique qui forme la gaine polymérique interne et/ou externe d'étanchéité. La matrice polymérique est une matrice continue. La gaine polymérique interne et/ou externe d'étanchéité peut éventuellement comprendre des composants dispersés de façon discontinue dans la matrice polymérique, mais qui ne font pas partie de la matrice polymérique. De tels composants peuvent par exemple être des charges telles que des fibres.

La matrice polymérique de la gaine polymérique interne et/ou externe d'étanchéité est généralement obtenue par extrusion d'un ou de plusieurs polymères (qui formeront la matrice polymérique) et éventuellement d'additifs (mélange maître). Lors de l'extrusion, certains additifs sont incorporés dans la matrice polymérique, alors que d'autres ne se mélangent pas avec les polymères formant la matrice polymérique et se dispersent de façon discontinue dans la matrice polymérique, pour former des composants dispersés de façon discontinue dans la matrice polymérique.

Selon une première alternative, la conduite selon l'invention comprend au moins une gaine polymérique interne et/ou externe d'étanchéité dont la matrice polymérique comprend un polyéthylène à très haut poids moléculaire.

Selon cette alternative, la gaine polymérique interne et/ou externe d'étanchéité dont la matrice polymérique comprend un polyéthylène à très haut poids moléculaire est généralement obtenue par extrusion d'un ou de plusieurs polymères (qui formera(ont) la matrice polymérique), l'un d'eux étant un polyéthylène à très haut poids moléculaire, et éventuellement en présence d'additifs.

Les composants dispersés de façon discontinue dans la matrice polymérique peuvent éventuellement comprendre des polymères, par exemple un polyéthylène à très haut poids moléculaire. Cela étant, une conduite flexible :
- comprenant une gaine polymérique d'étanchéité comprenant un composant dispersé de façon discontinue dans la matrice polymérique (notamment des charges telles que des fibres) comprenant ou composé de polyéthylène à très haut poids moléculaire,
- mais dont la matrice polymérique est exempte de polyéthylène à très haut poids moléculaire,
ne répond pas à la définition d'une conduite comprenant au moins une gaine polymérique d'étanchéité dont la matrice polymérique comprend un polyéthylène à très haut poids moléculaire, telle que définie dans cette première alternative.

Selon une deuxième alternative, la conduite selon l'invention comprend au moins une gaine polymérique interne et/ou externe d'étanchéité comprenant un composant dispersé de façon discontinue dans la matrice polymérique, ledit composant comprenant un polyéthylène à très haut poids moléculaire.

Selon cette deuxième alternative, un composant dispersé de façon discontinue dans la matrice polymérique de la gaine polymérique interne et/ou externe d'étanchéité comprend un polyéthylène à très haut poids moléculaire. Le composant peut être une charge telle qu'une fibre. Le composant comprenant un polyéthylène à très haut poids moléculaire est généralement un des additifs du mélange maitre utilisé lors de l'extrusion. Selon cette deuxième alternative, la matrice polymérique de la gaine polymérique interne et/ou externe d'étanchéité peut être exempte de polyéthylène à très haut poids moléculaire.

Selon une troisième alternative, la conduite selon l'invention comprend au moins une gaine polymérique interne et/ou externe d'étanchéité comprenant un composant dispersé de façon discontinue dans la matrice polymérique, ledit composant comprenant un polyéthylène à très haut poids moléculaire et dont la matrice polymérique comprend un polyéthylène à très haut poids moléculaire.

Selon cette troisième alternative, le polyéthylène à très haut poids moléculaire est donc présent à la fois dans la matrice polymérique et dans un composant dispersé de façon discontinue dans la matrice polymérique.

Dans un mode de réalisation, dans la conduite flexible selon l'invention, la gaine polymérique interne et/ou externe d'étanchéité comprend, en plus du polyéthylène à très haut poids moléculaire, une autre polyoléfine.

Par « autre polyoléfine », on entend que la polyoléfine n'est pas un polyéthylène à haut poids moléculaire. L'autre polyoléfine de la gaine polymérique interne et/ou externe d'étanchéité est notamment un polyéthylène réticulé ou non, ou un polypropylène réticulé ou non.

Dans un mode de réalisation, la gaine polymérique interne et/ou externe d'étanchéité comprend un polyéthylène à très haut poids moléculaire et une polyoléfine non réticulée, telle qu'un polyéthylène non réticulé ou un polypropylène non réticulé. Le polyéthylène à très haut poids moléculaire est non réticulé. Une telle gaine polymérique interne et/ou externe d'étanchéité est avantageusement moins coûteuse qu'une gaine comprenant un polymère réticulé, car sa préparation ne nécessite pas d'étape de réticulation (gain de temps) et de dispositif de réticulation coûteux.

Dans un autre mode de réalisation, la gaine polymérique interne et/ou externe d'étanchéité comprend un polyéthylène à très haut poids moléculaire et une polyoléfine réticulée, telle qu'un polyéthylène réticulé ou un polypropylène réticulé. Le polyéthylène à très haut poids moléculaire de cette gaine polymérique interne et/ou externe d'étanchéité est non réticulé. La polyoléfine réticulée peut être réticulée par silane, par peroxyde, par époxyde ou par anhydride maléique. Une gaine polymérique interne et/ou externe d'étanchéité comprenant une polyoléfine réticulée présente certaines propriétés (par exemple des propriétés mécaniques, une résistance à la chaleur et/ou résistance au cloquage) améliorées par rapport à une gaine polymérique interne et/ou externe d'étanchéité comprenant une polyoléfine non réticulée.

Quel que soit le mode de réalisation envisagé, dans la gaine polymérique interne et/ou externe d'étanchéité de la conduite, le polyéthylène à très haut poids moléculaire peut être le polymère majoritaire ou le polymère minoritaire.

Lorsqu'il est majoritaire, le rapport massique entre le polyéthylène à très haut poids moléculaire et la somme du polyéthylène à très haut poids moléculaire et de la polyoléfine est supérieur à 50%. De préférence, le rapport massique entre le polyéthylène à très haut poids moléculaire et la somme du polyéthylène à très haut poids moléculaire et de la polyoléfine est compris entre 55% et 95%.

Alternativement, le polyéthylène à très haut poids moléculaire peut être minoritaire (dans la gaine polymérique interne et/ou externe d'étanchéité de la conduite, le rapport massique entre le polyéthylène à très haut poids moléculaire et la somme du polyéthylène à très haut poids moléculaire et de la polyoléfine étant alors inférieur à 50%). De préférence, le rapport massique entre le polyéthylène à très haut poids moléculaire et la somme du polyéthylène à très haut poids moléculaire et de la polyoléfine est supérieur à 5%, notamment supérieur à 15%, en particulier supérieur à 25%, et inférieur à 50%.

Généralement, le polyéthylène à très haut poids moléculaire et l'autre polyoléfine appartiennent à la matrice polymérique de la gaine polymérique interne et/ou externe d'étanchéité. Ainsi, la conduite comprend typiquement au moins une gaine polymérique interne et/ou externe d'étanchéité dont la matrice polymérique comprend, en plus du polyéthylène à très haut poids moléculaire, une autre polyoléfine.

Généralement, dans la conduite flexible, la gaine polymérique interne et/ou externe d'étanchéité comprenant un polyéthylène à très haut poids moléculaire comprend des additifs, tels que antioxydants, anti-UV, lubrifiants et autres charges usuellement utilisées dans les thermoplastiques.

La conduite flexible selon l'invention peut comprendre une gaine polymérique interne et/ou externe d'étanchéité constituée de :
- un polyéthylène à très haut poids moléculaire,
- éventuellement une polyoléfine, et
- éventuellement des additifs, tels que des antioxydants, des anti-UV, des lubrifiants et des charges.

Une conduite flexible comprenant une gaine polymérique interne et/ou externe d'étanchéité comprenant un polyéthylène à très haut poids moléculaire présente les avantages suivants :
- La gaine polymérique interne et/ou externe d'étanchéité comprenant un polyéthylène à très haut poids moléculaire résiste mieux au cloquage qu'une gaine polymérique interne et/ou externe d'étanchéité comprenant un polyéthylène classique, réticulé ou non. Par conséquent, une conduite flexible comprenant une gaine polymérique interne et/ou externe d'étanchéité comprenant un polyéthylène à très haut poids moléculaire peut être utilisée à des températures et/ou pressions supérieures à celles utilisées pour une conduite flexible comprenant une gaine polymérique interne et/ou externe d'étanchéité à base de polyéthylène non réticulé ou à base de polyéthylène réticulé.
- La gaine polymérique interne et/ou externe d'étanchéité comprenant un polyéthylène à très haut poids moléculaire est moins coûteuse qu'une gaine polymérique interne et/ou externe d'étanchéité à base de PVDF.
- La gaine polymérique externe d'étanchéité comprenant un polyéthylène à très haut poids moléculaire résiste bien à l'usure, due par exemple aux frottements répétés d'un tube de guidage tel qu'un « I-tube » ou un « J-tube » selon sa forme ou bien par usure accidentelle lors de l'installation de la conduite flexible ou encore, lors de son utilisation en service.

Selon un deuxième objet, l'invention concerne un procédé de préparation de la conduite flexible sous marine définie ci-dessus, comprenant les étapes suivantes :
a) extrusion pour former une gaine polymérique interne ou externe d'étanchéité comprenant un polyéthylène à très haut poids moléculaire, l'extrusion étant éventuellement réalisée sur une autre couche,
b) éventuellement assemblage de la gaine polymérique interne ou externe d'étanchéité obtenue à l'étape a) avec au moins une autre couche.

L'étape a) d'extrusion peut être réalisée par toute méthode connue de l'homme du métier, par exemple en utilisant une extrudeuse mono-vis ou bi-vis.

Une matrice polymérique comprenant du polyéthylène à très haut poids moléculaire peut facilement être coextrudée, contrairement à une matrice polymérique à base de polyéthylène réticulé.

Lorsque la gaine polymérique interne et/ou externe d'étanchéité comprend plusieurs polymères (par exemple un polyéthylène à très haut poids moléculaire et une autre polyoléfine), le mélange des deux polymères peut être réalisé avant ou pendant l'extrusion.

Dans un mode de réalisation, la gaine polymérique interne et/ou externe d'étanchéité de la conduite flexible préparée comprend un polyéthylène à très haut poids moléculaire, non réticulé, et une polyoléfine, réticulée ou non.

Selon une première alternative de ce mode de réalisation, la polyoléfine de la gaine polymérique interne et/ou externe d'étanchéité de la conduite flexible préparée n'est pas réticulée. Le polyéthylène à très haut poids moléculaire n'est pas réticulé non plus.

Le procédé de préparation d'une telle conduite flexible sous marine ne met généralement en oeuvre ni d'extrusion d'une polyoléfine réticulable, souvent difficile, ni de réticulation coûteuse, ce qui est avantageux.

Plus précisément, des difficultés sont souvent rencontrées lorsqu'une polyoléfine réticulable, par exemple un polyéthylène réticulable, est extrudée. Par exemple, l'extrusion d'une polyoléfine réticulable nécessite généralement d'utiliser un appareillage non conventionnel pour l'extrusion et d'effectuer l'extrusion à des températures peu élevées pour éviter la décomposition du catalyseur de réticulation lors de l'extrusion, comme illustré dans la demande FR 2 521 573. Dans cette demande, pour faciliter l'extrusion d'un mélange de polyéthylène et de composé générateur de radicaux libre (catalyseur de la réticulation ultérieure du polyéthylène), un (co)polymère d'acrylate de n-alkyle en C14 à C24 nommé « additif réactif de mise en oeuvre », est ajouté lors de l'extrusion. Avantageusement, selon cette première alternative, l'étape d'extrusion a) du procédé selon l'invention ne nécessite pas l'introduction de tels « additifs réactif de mise en oeuvre » et peut être réalisée dans un appareillage usuel.

De plus, selon cette première alternative, le procédé est généralement exempt d'étape de réticulation (aucun dispositif de réticulation coûteux n'est nécessaire).

Ainsi, le procédé de préparation d'une conduite flexible comprenant une gaine polymérique interne et/ou externe d'étanchéité comprenant un polyéthylène à très haut poids moléculaire et une polyoléfine non réticulée est généralement plus rapide, plus simple et moins coûteux que le procédé de préparation d'une conduite flexible comprenant une gaine polymérique interne et/ou externe d'étanchéité comprenant un polyéthylène réticulé.

Selon une deuxième alternative de ce mode de réalisation, la polyoléfine de la gaine polymérique interne et/ou externe d'étanchéité de la conduite flexible préparée est réticulée. Le polyéthylène à très haut poids moléculaire est non réticulé.

Le procédé de préparation comprend alors typiquement les étapes suivantes :
a) extrusion pour former une gaine polymérique interne ou externe d'étanchéité comprenant un polyéthylène à très haut poids moléculaire et une polyoléfine réticulable, l'extrusion étant éventuellement réalisée sur une autre couche, a2) réticulation de la polyoléfine réticulable,
b) éventuellement assemblage de la gaine polymérique interne ou externe d'étanchéité obtenue à l'étape a2) avec au moins une autre couche.

Typiquement, lors de l'étape a), un mélange comprenant un polyéthylène à très haut poids moléculaire (non réticulable), une polyoléfine réticulable et un catalyseur de réticulation est extrudé.

Dans un mode de réalisation, le polyéthylène à très haut poids moléculaire sert de support au catalyseur de réticulation de la polyoléfine. L'utilisation de polyéthylène à très haut poids moléculaire servant de support au catalyseur de réticulation de la polyoléfine permet avantageusement d'éviter d'utiliser un polyéthylène (n'ayant pas un haut poids moléculaire, et n'étant pas réticulable) servant de support au catalyseur de réticulation de la polyoléfine réticulable. En effet, généralement, pour préparer une gaine polymérique interne et/ou externe d'étanchéité comprenant une polyoléfine réticulable (par exemple un polyéthylène réticulable Crossflex^{®} décrit ci-dessous), le catalyseur de la réticulation de la polyoléfine réticulable est introduit via un masterbatch comprenant du polyéthylène (non réticulable), avec un ratio massique de polyéthylène (non réticulable) sur la polyoléfine réticulable de l'ordre de 5%. Or, la résistance au phénomène de cloquage de ce polyéthylène non réticulable est plus faible que celle d'un polyéthylène à très haut poids moléculaire. Ainsi, le remplacement du polyéthylène non réticulable (servant de support au catalyseur de réticulation de la polyoléfine réticulable) par du polyéthylène à très haut poids moléculaire (servant de support au catalyseur de réticulation de la polyoléfine réticulable) permet d'obtenir une couche plus résistance au phénomène de cloquage.

La nature du catalyseur de réticulation et la nature de l'étape de réticulation dépendent bien sûr du type de réticulation souhaité. Typiquement, la polyoléfine est réticulée par silane, par peroxyde, par époxyde ou par anhydride maléique. La réticulation de la polyoléfine peut être effectuée par voie physique, par exemple par radiations d'électrons, d'UV ou rayons gamma, ou chimique, par exemple par méthode silane, azo ou peroxyde.

Dans un mode de réalisation, la polyoléfine réticulable mise en oeuvre lors de l'étape a) est une polyoléfine porteuse de groupes trialcoxysilane, notamment de formule -Si-(OR₁₀)(OR₁₁)(OR₁₂), où R₁₀, R₁₁ et R₁₂ sont indépendamment des groupes alkyle, de préférence n-propyle, isopropyle, éthyle ou méthyle, de manière particulièrement préférée méthyle car les fonctions Si-OMe sont facilement hydrolysables en fonctions silanol Si-OH. Par exemple, la polyoléfine réticulable est un polyéthylène comprenant des chaînes latérales de formule -CH₂-CH₂-Si-(OR₁₀)(OR₁₁)(OR₁₂), où R₁₀, R₁₁ et R₁₂ sont tels que définis ci-dessus, en particulier des chaînes latérales de formule-CH₂-CH₂-Si-(OMe)₃. La polyoléfine réticulable peut en particulier être un polyéthylène réticulable Crossflex^{®}, de formule suivante :

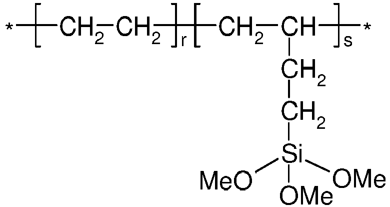

Les polyoléfines réticulables sont soit commerciales, soit peuvent être préparées par des techniques connues de l'homme du métier. Par exemple, les polymères polyéthylène comportant des chaînes latérales de formule -CH₂-CH₂-Si-(OR₁₀)(OR₁₁)(OR₁₂) peuvent être préparés par réaction entre du polyéthylène et le dérivé vinylsilane de formule CH₂=CH-Si-(OR₁₀)(OR₁₁)(OR₁₂) en présence de peroxyde (procédé Sioplast).

Typiquement, lorsque la polyoléfine réticulable mise en oeuvre lors de l'étape a) est une polyoléfine porteuse de groupes trialcoxysilane, la réticulation de l'étape a2) consiste en une hydrolyse des fonctions alcoxysilane et une condensation des groupes silanol pour former des fonctions siloxane. Cette réticulation peut être catalysée, typiquement par un catalyseur de la condensation de silanol, par exemple par un catalyseur à base d'étain tel que du dilaurate de dioctylétain (DOTL).

Dans un mode de réalisation, lors de l'étape a), un mélange comprenant un polyéthylène à très haut poids moléculaire (servant éventuellement de support du dilaurate de dioctylétain), une polyoléfine porteuse de groupes trialcoxysilane et un catalyseur de la condensation de silanol est extrudé. Dans ce mélange, le rapport massique entre le polyéthylène à très haut poids moléculaire et la somme du polyéthylène à très haut poids moléculaire et de la polyoléfine greffée silane est par exemple de 5%.

Dans les procédés décrits ci-après, par « étapes a2) de réticulation », « a2ᵢ) réticulation de la gaine polymérique interne d'étanchéité » ou « a2ₑ) réticulation de la gaine polymérique externe d'étanchéité », on entend réticulation de la polyoléfine réticulable comprise dans la couche obtenue à l'étape a), aᵢ) ou aₑ). Ces étapes a2), a2ᵢ) ou a2ₑ) sont uniquement effectuée si la couche (gaine interne et/ou externe) préparée comprend une polyoléfine réticulable.

La gaine polymérique interne et/ou externe d'étanchéité obtenue à la fin de l'étape a) (ou a2) si une réticulation est effectuée) est typiquement tubulaire, a généralement un diamètre de 50 mm à 600 mm, de préférence de 50 à 400 mm, une épaisseur de 1 mm à 150 mm, préférentiellement de 40 à 100 mm et une longueur de 1 m à 10 km.

Le procédé comprend éventuellement l'étape b) d'assemblage de la gaine polymérique interne ou externe d'étanchéité obtenue lors de l'étape a) (ou a2) si une réticulation est effectuée) avec au moins une autre couche pour former la conduite sous marine flexible.

Les couches sont ainsi assemblées pour former une conduite flexible sous marine de type non lié ("unbonded" en langue anglaise), telle que décrite dans les documents normatifs publiés par l'American Petroleum Institute (API), API 17J et API RP 17B.

Selon une première alternative, l'extrusion de l'étape a) n'est pas réalisée sur une autre couche de la conduite flexible, mais de manière indépendante, et la gaine polymérique interne ou externe d'étanchéité obtenue à la fin de l'extrusion est alors éventuellement rapportée et calandrée avec au moins une autre couche lors de l'étape b). Le procédé de préparation de la conduite flexible comprend alors les étapes de :
a) extrusion pour former une gaine polymérique interne ou externe d'étanchéité comprenant un polyéthylène à très haut poids moléculaire,
   éventuellement a2) réticulation,
b) éventuellement assemblage de la gaine polymérique interne ou externe d'étanchéité obtenue à l'étape a) (ou a2) si une réticulation est effectuée) avec au moins une autre couche.

Généralement, selon cette première alternative, l'étape b) est effectuée.

Par exemple, lorsque c'est la gaine polymérique interne d'étanchéité comprenant un polyéthylène à très haut poids moléculaire qui est obtenue lors de l'étape a), celle-ci est généralement rapportée et calandrée avec une voûte de pression, au moins une nappe d'armures de traction (généralement deux nappes d'armures) et une gaine polymérique externe (comprenant éventuellement un polyéthylène à très haut poids moléculaire). Cet exemple permet notamment de réaliser des conduites flexibles à passage lisse (« Smooth bore » en anglais).

Selon une seconde alternative, l'extrusion de l'étape a) est réalisée sur une autre couche de la conduite flexible. Le procédé de préparation de la conduite flexible comprend alors les étapes de :
a) extrusion pour former une gaine polymérique interne ou externe d'étanchéité comprenant un polyéthylène à très haut poids moléculaire, l'extrusion étant réalisée sur une autre couche,
   éventuellement a2) réticulation,
b) éventuellement assemblage de la gaine polymérique interne ou externe d'étanchéité obtenue à l'étape a) (ou a2) si une réticulation est effectuée) avec au moins une autre couche.

Dans un premier mode de réalisation de cette seconde alternative, l'étape b) est mise en oeuvre et le procédé de préparation de la conduite flexible comprend les étapes de :
a) extrusion pour former une gaine polymérique interne ou externe d'étanchéité comprenant un polyéthylène à très haut poids moléculaire, l'extrusion étant réalisée sur une autre couche,
   éventuellement a2) réticulation,
b) assemblage de la gaine polymérique interne ou externe d'étanchéité obtenue à l'étape a) (ou a2) si une réticulation est effectuée) avec au moins une autre couche.

Par exemple, lorsque c'est la gaine polymérique interne d'étanchéité comprenant un polyéthylène à très haut poids moléculaire qui est obtenue lors de l'étape a), l'extrusion de la gaine interne d'étanchéité (étape a)) est typiquement réalisée sur la carcasse, pour obtenir un ensemble (carcasse / gaine polymérique interne d'étanchéité comprenant un polyéthylène à très haut poids moléculaire) qui sera alors rapporté et calandré avec au moins une autre couche lors de l'étape b), typiquement une voûte de pression, au moins une nappe d'armures de traction (généralement deux nappes d'armures) et une gaine polymérique externe (comprenant éventuellement un polyéthylène à très haut poids moléculaire). Cet exemple permet notamment de réaliser des conduites flexibles à passage non lisse (« Rough bore » en anglais).

Dans un second mode de réalisation de cette seconde alternative, le procédé ne comprend pas d'étape b) d'assemblage de la gaine polymérique interne ou externe d'étanchéité obtenue à l'étape a) (ou a2) si une réticulation est effectuée) avec au moins une autre couche, et le procédé de préparation de la conduite flexible comprend les étapes de :
a) extrusion pour former une gaine polymérique interne ou externe d'étanchéité comprenant un polyéthylène à très haut poids moléculaire, l'extrusion étant réalisée sur une autre couche,
éventuellement a2) réticulation.

Par exemple, lorsque c'est la gaine polymérique externe d'étanchéité comprenant un polyéthylène à très haut poids moléculaire qui est obtenue lors de l'étape a), l'extrusion de la gaine externe d'étanchéité est typiquement réalisée sur un ensemble de couches : au moins une nappe d'armures de traction (généralement deux nappes d'armures) / voûte de pression / gaine polymérique interne d'étanchéité (comprenant éventuellement un polyéthylène à très haut poids moléculaire) / éventuellement carcasse (les couches étant listées de l'extérieur vers l'intérieur, l'extrusion étant réalisée sur la couche extérieure de cet ensemble, c'est-à-dire sur une nappe d'armures de traction).

Par ailleurs, dans un mode de réalisation, le procédé permet de préparer une conduite flexible dont les gaines interne et externe comprennent toutes les deux un polyéthylène à très haut poids moléculaire.

Deux procédés de préparation typiques peuvent alors être distingués, selon qu'une conduite flexible à passage lisse ou non lisse soit désirée à la fin du procédé.

Selon un premier procédé particulièrement adapté pour la préparation de conduite flexible à passage lisse, le procédé de préparation d'une conduite flexible comprenant des couches interne et externe d'étanchéité comprenant un polyéthylène à très haut poids moléculaire comprend les étapes de :
aᵢ) extrusion pour former une gaine polymérique interne d'étanchéité comprenant un polyéthylène à très haut poids moléculaire,
   éventuellement a2ᵢ) réticulation de la gaine polymérique interne d'étanchéité obtenue à l'étape aᵢ),
aₑ) extrusion pour former une gaine polymérique externe d'étanchéité comprenant un polyéthylène à très haut poids moléculaire,
   éventuellement a2ₑ) réticulation de la gaine polymérique externe d'étanchéité obtenue à l'étape aₑ),
b) assemblage de la gaine polymérique interne d'étanchéité obtenue à l'étape aᵢ) (ou a2ᵢ) si une réticulation est effectuée) avec une voûte de pression, au moins une nappe d'armures de traction (généralement deux nappes d'armures) et la gaine polymérique externe obtenue à l'étape aₑ) (ou a2ₑ) si une réticulation est effectuée).

Selon un second procédé particulièrement adapté pour la préparation de conduite flexible à passage non lisse, le procédé de préparation d'une conduite flexible comprenant des couches interne et externe d'étanchéité comprenant un polyéthylène à très haut poids moléculaire comprend les étapes de :
aᵢ) extrusion pour former une gaine polymérique interne d'étanchéité comprenant un polyéthylène à très haut poids moléculaire sur une carcasse métallique,
   éventuellement a2ᵢ) réticulation de la gaine polymérique interne d'étanchéité obtenue à l'étape aᵢ),
aₑ) extrusion pour former une gaine polymérique externe d'étanchéité comprenant un polyéthylène à très haut poids moléculaire,
   éventuellement a2ₑ) réticulation de la gaine polymérique externe d'étanchéité obtenue à l'étape ae),
b) assemblage de l'ensemble (carcasse métallique / gaine polymérique interne d'étanchéité obtenue à l'étape aᵢ) (ou a2ᵢ) si une réticulation est effectuée)) avec une voûte de pression, au moins une nappe d'armures de traction (généralement deux nappes d'armures) et la gaine polymérique externe obtenue à l'étape aₑ) (ou a2ₑ) si une réticulation est effectuée).

Selon un troisième objet, l'invention a pour objet une conduite flexible sous marine susceptible d'être obtenue par le procédé précité.

Selon un quatrième objet, l'invention a pour objet l'utilisation de la conduite flexible sous marine précitée pour le transport d'hydrocarbures.

Selon un cinquième objet, l'invention a pour objet l'utilisation d'un polyéthylène à très haut poids moléculaire, voire à ultra haut poids moléculaire, dans une gaine polymérique interne et/ou externe d'étanchéité d'une conduite flexible sous marine destinée au transport de d'hydrocarbures pour augmenter la résistance de ladite gaine polymérique interne et/ou externe d'étanchéité au cloquage.

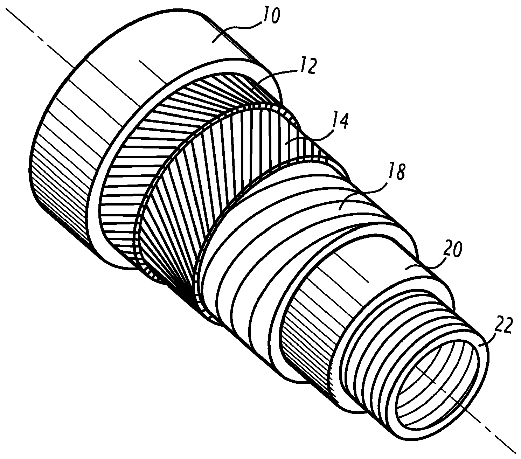

D'autres particularités et avantages de l'invention ressortiront à la lecture de la description faite ci-après de modes de réalisation particuliers de l'invention, donnés à titre indicatif mais non limitatif, en référence à la figure.

La figure est une vue schématique partielle en perspective d'une conduite flexible selon l'invention. Elle illustre une conduite conforme à l'invention comprenant, de l'extérieur vers l'intérieur :
- une gaine polymérique externe d'étanchéité 10,
- une nappe externe d'armures de traction 12,
- une nappe interne d'armures de traction 14 enroulée en sens opposé de la nappe externe 12,
- une voûte de pression 18 de reprise des efforts radiaux générés par la pression des hydrocarbures transportés,
- une gaine polymérique interne d'étanchéité 20, et
- une carcasse interne 22 de reprise des efforts radiaux d'écrasement,
dans laquelle la gaine polymérique externe d'étanchéité 10 et/ou la gaine polymérique interne d'étanchéité 20 comprend(nent) un polyéthylène à très haut poids moléculaire.

Du fait de la présence de la carcasse interne 22, cette conduite est dite à passage non lisse (" rough bore " en langue anglaise). L'invention pourrait aussi s'appliquer à une conduite dite à passage lisse (" smooth-bore " en langue anglaise), ne comportant pas de carcasse interne.

De même, on ne sortirait pas du champ de présente invention en supprimant la voûte de pression 18, sous réserve que les angles d'hélice des fils constituant les nappes d'armures 12, 14 soient proches de 55° et en sens opposé.

Les nappes d'armures 12, 14 sont obtenues par enroulement à pas long d'un ensemble de fils en matériau métallique ou composite, de section généralement sensiblement rectangulaire. L'invention s'appliquerait aussi si ces fils avaient une section de géométrie circulaire ou complexe, du type par exemple T autoagrafé. Sur la figure, seules deux nappes d'armures 12 et 14 sont représentées, mais la conduite pourrait aussi comporter une ou plusieurs paires supplémentaires d'armures. La nappe d'armures 12 est dite externe car elle est ici la dernière, en partant de l'intérieur de la conduite, avant la gaine d'étanchéité externe 10.

La conduite flexible peut également comprendre des couches non représentées sur la figure, telles que :
- une couche de maintien entre la gaine polymérique externe 10 et les nappes d'armures de traction 12 et 14, ou entre deux nappes d'armures de traction,
- une ou plusieurs couches anti-usure (" anti-wear layer " en anglais) en matériau polymérique en contact soit avec la face interne de la couche de maintien précitée, soit avec sa face externe, soit avec les deux faces, cette couche anti-usure permettant d'éviter que la couche de maintien s'use au contact avec des armures métalliques. Les couches anti-usure, qui sont bien connues de l'homme du métier, sont généralement réalisées par enroulement hélicoïdal d'un ou plusieurs rubans obtenus par extrusion d'un matériau polymérique à base de polyamide, de polyoléfines, ou de PVDF (" polyvinylidene fluoride " en anglais). On pourra aussi se reporter au document WO 2006/120320 qui décrit des couches anti-usure constituées de rubans en polysulfone (PSU), polyethersulfone (PES), polyphenylsulfone (PPSU), polyetherimide (PEI), polytétrafluoroéthylène (PTFE), polyétheréthercétone (PEEK) ou polysulfure de phénylène (PPS).

### EXEMPLE : Test de résistance au cloquage

Des tests de cloquage on été réalisés en soumettant 20 fois les échantillons suivants à une température de 90°C, une pression de 250 bars, dans un milieu CH₄ (85%) / CO₂ (15%) et avec une vitesse de décompression de 70 bars/min (mode opératoire selon la norme API 17J):
- échantillon 1 : polyéthylène réticulé (Crossflex^{®} (Technip)) de 7 mm d'épaisseur (exemple comparatif),
- échantillon 2 : polyéthylène à ultra haut poids moléculaire de 10 mm d'épaisseur de Röchling (Polystone M naturel), et
- échantillon 3 : polyéthylène réticulé (Crossflex^{®} (Technip)) + 10% en poids d'un polyéthylène à ultra haut poids moléculaire de grade GUR^{®} 2122 de Ticona, l'ensemble ayant de 7 mm d'épaisseur.
Les échantillons 2 et 3 ont bien résisté et ne présentent pas de signes de cloquage, contrairement à l'échantillon 1 en polyéthylène réticulé.

D'autres tests de cloquage on été réalisés en soumettant 20 fois les échantillons suivants à une température de 90°C, une pression de 300 bars, dans un milieu CH₄ (85%) / CO₂ (15%) et avec une vitesse de décompression de 70 bars/min (mode opératoire selon la norme API 17J):
- échantillon 1 : polyéthylène réticulé (Crossflex^{®} (Technip)) de 7 mm d'épaisseur (exemple comparatif),
- échantillon 3 : polyéthylène réticulé (Crossflex^{®} (Technip)) + 10% en poids d'un polyéthylène à ultra haut poids moléculaire de grade GUR^{®} 2122 de Ticona, l'ensemble ayant de 7 mm d'épaisseur.
L'échantillon 3 a bien résisté et ne présente pas de signes de cloquage, contrairement à l'échantillon 1 en polyéthylène réticulé.

## Revendications

1. Conduite flexible sous marine de type non lié destinée au transport de d'hydrocarbures, comprenant, de l'extérieur vers l'intérieur :
- une gaine polymérique externe d'étanchéité,
- au moins une nappe d'armures de traction,
- une voûte de pression,
- une gaine polymérique interne d'étanchéité,
- éventuellement une carcasse métallique,
dans laquelle la gaine polymérique externe d'étanchéité et/ou la gaine polymérique interne d'étanchéité comprend(nent) un polyéthylène à très haut poids moléculaire non réticulé dont la masse moléculaire moyenne en masse (Mw) est supérieure à 1 000 000 g/mol.

2. Conduite flexible sous marine selon la revendication 1, dans laquelle le polyéthylène est à ultra haut poids moléculaire, sa masse moléculaire moyenne en masse (Mw) étant supérieure à 3 000 000 g/mol.

3. Conduite flexible sous marine selon la revendication 1 ou 2, dans laquelle le polyéthylène à très haut poids moléculaire est un homopolymère d'éthylène ou un copolymère d'éthylène contenant moins de 40% en poids en poids d'unités issues de monomères α-oléfines comprenant de 3 à 10 atomes de carbone.

4. Conduite flexible sous marine selon l'une quelconque des revendications 1 à 3, dans laquelle la gaine polymérique interne et/ou externe d'étanchéité comprend le polyéthylène à très haut poids moléculaire et une autre polyoléfine.

5. Conduite flexible sous marine selon la revendication 4, dans laquelle l'autre polyoléfine est non réticulée, telle qu'un polyéthylène non réticulé ou un polypropylène non réticulé.

6. Conduite flexible sous marine selon la revendication 4, dans laquelle l'autre polyoléfine est réticulée, telle qu'un polyéthylène réticulé ou un polypropylène réticulé.

7. Conduite flexible sous marine selon l'une quelconque des revendications 4 à 6, dans laquelle le rapport massique entre le polyéthylène à très haut poids moléculaire et la somme du polyéthylène à très haut poids moléculaire et de la polyoléfine est supérieur à 50%.

8. Conduite flexible sous marine selon l'une quelconque des revendications 4 à 6, dans laquelle le rapport massique entre le polyéthylène à très haut poids moléculaire et la somme du polyéthylène à très haut poids moléculaire et de la polyoléfine est inférieur à 50%.

9. Procédé de préparation de la conduite flexible sous marine selon l'une quelconque des revendications 1 à 8, comprenant les étapes suivantes :
a) extrusion pour former une gaine polymérique interne ou externe d'étanchéité comprenant un polyéthylène à très haut poids moléculaire non réticulé dont la masse moléculaire moyenne en masse (Mw) est supérieure à 1 000 000 g/mol, l'extrusion étant éventuellement réalisée sur une autre couche,
b) éventuellement assemblage de la gaine polymérique interne ou externe d'étanchéité obtenue à l'étape a) avec au moins une autre couche.

10. Procédé de préparation selon la revendication 9 de la conduite flexible sous marine selon la revendication 5, exempt d'étape de réticulation.

11. Procédé de préparation selon la revendication 9 de la conduite flexible sous marine selon la revendication 6, comprenant les étapes suivantes :
a) extrusion pour former une gaine polymérique interne ou externe d'étanchéité comprenant un polyéthylène à très haut poids moléculaire et une polyoléfine réticulable, l'extrusion étant éventuellement réalisée sur une autre couche,
a2) réticulation de la polyoléfine réticulable,
c) éventuellement assemblage de la gaine polymérique interne ou externe d'étanchéité obtenue à l'étape a2) avec au moins une autre couche.

12. Procédé de préparation selon la revendication 11, dans lequel la polyoléfine réticulable est une polyoléfine porteuse de groupes trialcoxysilane.

13. Utilisation d'une conduite flexible sous marine selon l'une quelconque des revendications 1 à 8 pour le transport d'hydrocarbures.

14. Utilisation d'un polyéthylène à très haut poids moléculaire non réticulé dont la masse moléculaire moyenne en masse (Mw) est supérieure à 1 000 000 g/mol dans une gaine polymérique interne et/ou externe d'étanchéité d'une conduite flexible sous marine destinée au transport de d'hydrocarbures pour augmenter la résistance de ladite gaine polymérique interne et/ou externe d'étanchéité au cloquage.

## Patentansprüche

1. Flexible Unterwasserröhre nicht verbundenen Typs, die zum Transport von Kohlenwasserstoffen bestimmt ist, umfassend, von außen nach innen:
- eine äußere Polymer-Dichtungshülle,
- mindestens eine Zugbewehrungsbahn,
- einen Druckbogen,
- eine innere Polymer-Dichtungshülle,
- eventuell ein Metallgerüst,
wobei die äußere Polymer-Dichtungshülle und/oder die innere Polymer-Dichtungshülle ein Polyethylen mit unvernetztem sehr hohem Molekulargewicht umfasst/umfassen, dessen mittlere molekulare Masse in Masse (Mw) über 1.000.000 g/mol beträgt.

2. Flexible Unterwasserröhre nach Anspruch 1, wobei das Polyethylen ein ultrahohes Molekulargewicht hat, wobei seine mittlere molekulare Masse in Masse (Mw) über 3.000.000 g/mol beträgt.

3. Flexible Unterwasserröhre nach Anspruch 1 or 2, wobei das Polyethylen mit sehr hohem Molekulargewicht ein Ethylen-Homopolymer oder ein Ethylen-Copolymer ist, enthaltend unter 40 Gew.-% in Gewicht Einheiten aus α-Olefin-Monomeren, umfassend 3 bis 10 Kohlenstoffatome.

4. Flexible Unterwasserröhre nach einem der Ansprüche 1 bis 3, wobei die innere oder äußere Polymer-Dichtungshülle das Polyethylen mit sehr hohem Molekulargewicht und ein anderes Polyolefin umfasst.

5. Flexible Unterwasserröhre nach Anspruch 4, wobei das andere Polyolefin wie ein nicht vernetztes Polyethylen oder ein nicht vernetztes Polyprophylen nicht vernetzt ist.

6. Flexible Unterwasserröhre nach Anspruch 4, wobei das andere Polyolefin wie ein vernetztes Polyethylen oder ein vernetztes Polyprophylen vernetzt ist.

7. Flexible Unterwasserröhre nach einem der Ansprüche 4 bis 6, wobei das Massenverhältnis zwischen dem Polyethylen mit sehr hohem Molekulargewicht und der Summe des Polyethylens mit sehr hohem Molekulargewicht und des Polyolefins über 50 % beträgt.

8. Flexible Unterwasserröhre nach einem der Ansprüche 4 bis 6, wobei das Massenverhältnis zwischen dem Polyethylen mit sehr hohem Molekulargewicht und der Summe des Polyethylens mit sehr hohem Molekulargewicht und des Polyolefins unter 50 % beträgt.

9. Herstellungsverfahren der flexiblen Unterwasserröhre nach einem der Ansprüche 1 bis 8,umfassend die folgenden Schritte:
a) Extrudieren, um eine innere oder äußere Polymer-Dichtungshülle zu bilden, die ein Polyethylen mit unvernetztem sehr hohem Molekulargewicht umfasst, dessen mittlere molekulare Masse in Masse (Mw) über 1.000.000 g/mol beträgt, wobei die Extrusion eventuell auf einer anderen Schicht durchgeführt wird,
b) eventuell Verbinden der inneren oder äußeren Polymer-Dichtungshülle von Schritt a) mit mindestens einer anderen Schicht.

10. Herstellungsverfahren nach Anspruch 9 der flexiblen Unterwasserröhre nach Anspruch 5 ohne Vernetzungsschritt.

11. Herstellungsverfahren nach Anspruch 9 der flexiblen Unterwasserröhre nach Anspruch 6, umfassend die folgenden Schritte:
a) Extrudieren, um eine innere oder äußere Polymer-Dichtungshülle zu bilden, die ein Polyethylen mit sehr hohem Molekulargewicht und ein vernetzbares Polyolefin umfasst, wobei die Extrusion eventuell auf einer anderen Schicht durchgeführt wird,
a2) Vernetzen des vernetzbaren Polyolefins,
c) eventuell Verbinden der inneren oder äußeren Polymer-Dichtungshülle von Schritt a2) mit mindestens einer anderen Schicht.

12. Herstellungsverfahren nach Anspruch 11, wobei das vernetzbare Polyolefin ein Trialcoxysilangruppen tragendes Polyolefin ist.

13. Verwendung einer flexiblen Unterwasserröhre nach einem der Ansprüche 1 bis 8 für den Transport von Kohlenwasserstoffen.

14. Verwendung eines Polyethylens mit unvernetztem sehr hohem Molekulargewicht, dessen mittlere molekulare Masse in Masse (Mw) über 1.000.000 g/mol beträgt, in einer inneren und/oder äußeren Polymer-Dichtungshülle einer flexiblen Unterwasserröhre, die für den Transport von Kohlenwasserstoffen bestimmt ist, um die Widerstandsfähigkeit der inneren und/oder äußeren Polymer-Dichtungshülle gegenüber Blasenbildung zu erhöhen.

## Claims

1. A flexible underwater pipe intended for transporting hydrocarbons, comprising, from the outside to the inside:
- an external polymeric sealing sheath,
- at least one ply of tensile armors,
- a pressure vault,
- an internal polymeric sealing sheath,
- optionally a metal carcass,
wherein the external polymeric sealing sheath and/or the internal polymeric sealing sheath comprise(s) a non-crosslinked very high molecular weight polyethylene, the weight average molecular weight (Mw) of which is higher than 1 000 000 g/mol.

2. The flexible underwater pipe according to claim 1, wherein the polyethylene is an ultra high molecular weight polyethylene, the weight average molecular weight (Mw) thereof being higher than 3 000 000 g/mol.

3. The underwater flexible pipe according to claim 1 or 2, wherein the very high molecular weight polyethylene is a homopolymer of ethylene or a copolymer of ethylene containing less than 40% by weight of units derived from α-olefin monomers comprising from 3 to 10 carbon atoms.

4. The flexible underwater pipe according to any of claims 1 to 3, wherein the internal and/or external polymeric sealing sheath comprises the very high molecular weight polyethylene and another polyolefin.

5. The flexible underwater pipe according to claim 4, wherein the other polyolefin is non-crosslinked, such as a non-crosslinked polyethylene or a non-crosslinked polypropylene.

6. The flexible underwater pipe according to claim 4, wherein the other polyolefin is crosslinked, such as a crosslinked polyethylene or a crosslinked polypropylene.

7. The flexible underwater pipe according to any of claims 4 to 6, wherein the mass ratio between the very high molecular weight polyethylene and the sum of the very high molecular weight polyethylene and of the polyolefin is greater than 50%.

8. The flexible underwater pipe according to any of claims 4 to 6, wherein the mass ratio between the very high molecular weight polyethylene and the sum of the very high molecular weight polyethylene and of the polyolefin is less than 50%.

9. A method for preparing the flexible underwater pipe according to any of claims 1 to 8, comprising the following steps:
a) extrusion for forming an internal or external polymeric sealing sheath comprising a non-crosslinked very high molecular weight polyethylene, , the weight average molecular weight (Mw) of which is higher than 1 000 000 g/mol, the extrusion being optionally carried out on another layer,
b) optionally assembling the internal or external polymeric sealing sheath obtained in step a) with at least one other layer.

10. The method according to claim 9 for preparing the flexible underwater pipe according to claim 5, free from crosslinking step.

11. The method according to claim 9 for preparing the flexible underwater pipe according to claim 6, comprising the following steps:
a) extrusion for forming an internal or external polymeric sealing sheath comprising a very high molecular weight polyethylene and a crosslinkable polyolefin, the extrusion being optionally carried out on another layer,
a2) crosslinking the crosslinkable polyolefin,
b) optionally assembling the internal or external polymeric sealing sheath obtained in step a2) with at least one other layer.

12. The preparation method according to claim 11, wherein the crosslinkable polyolefin is a polyolefin bearing trialkoxysilane groups.

13. Use of an underwater flexible pipe according to any of claims 1 to 8 for transporting hydrocarbons.

14. Use of a non-crosslinked very high molecular weight polyethylene, the weight average molecular weight (Mw) of which is higher than 1 000 000 g/mol, in an internal and/or external polymeric sealing sheath of a flexible underwater pipe intended for transporting hydrocarbons for increasing the resistance to blistering of said internal and/or external polymeric sealing sheath.
